(19) Europäisches Patentamt
European Patent Office
Office européen des brevets

(11) EP 4 540 072 B1

(12) **FASCICULE DE BREVET EUROPEEN**

(45) Date de publication et mention de la délivrance du brevet:
**05.08.2026 Bulletin 2026/32**

(21) Numéro de dépôt: **23731655.9**

(22) Date de dépôt: **08.06.2023**

(51) Classification Internationale des Brevets (IPC):
***B60C 1/00*** (2006.01) ***C08L 23/08*** (2025.01)
***C08K 3/22*** (2006.01) ***C08K 3/36*** (2006.01)
***C08K 3/26*** (2006.01)

(52) Classification Coopérative des Brevets (CPC):
(C-Sets disponibles)
**B60C 1/0016; C08K 3/36; C08L 23/083;**
C08K 2003/2296; C08K 2201/006; C08K 2201/014
(Cont.)

(86) Numéro de dépôt international:
**PCT/EP2023/065349**

(87) Numéro de publication internationale:
**WO 2023/247198 (28.12.2023 Gazette 2023/52)**

(54) **COMPOSITION DE CAOUTCHOUC DIÉNIQUE COMPORTANT UNE MICROSILICE**

DIENKAUTSCHUKZUSAMMENSETZUNG MIT MIKROSILICA

DIENE RUBBER COMPOSITION COMPRISING A MICROSILICA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.06.2022 FR 2206002**

(43) Date de publication de la demande:
**23.04.2025 Bulletin 2025/17**

(73) Titulaire: **COMPAGNIE GENERALE DES ETABLISSEMENTS MICHELIN**
**63000 Clermont-Ferrand (FR)**

(72) Inventeurs:
- **GORNARD, Benjamin**
  **63040 CLERMONT-FERRAND CEDEX 09 (FR)**
- **WOLFS, Scott**
  **63040 CLERMONT-FERRAND CEDEX 09 (FR)**
- **ARAUJO DA SILVA, José-Carlos**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 2 336 231**
**WO-A1-2015/097195**
**JP-A- 2008 031 244**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08K 3/36, C08L 23/083;**
**C08L 23/083, C08L 91/00, C08L 91/06,**
**C08L 57/02, C08K 3/36, C08K 3/36, C08K 3/04,**
**C08K 5/548, C08K 3/22, C08K 5/31**

## Description

Le domaine de la présente invention est celui des compositions de caoutchouc diéniques renforcées d'une silice et destinées à être utilisées dans un pneumatique, plus particulièrement dans une bande de roulement d'un pneumatique.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (« Highly Dispersible Silica »), capables de rivaliser, du point de vue du pouvoir renforçant, avec les noirs de carbone conventionnels de grade pneumatique.

L'amélioration des propriétés d'adhérence, en particulier sur sol mouillé, reste cependant une préoccupation constante des concepteurs de pneumatiques. Une façon de conférer au pneumatique une adhérence élevée sur sol mouillé est d'utiliser dans sa bande de roulement une composition de caoutchouc qui présente un large potentiel hystérétique.

Les silices hautement dispersibles traditionnellement utilisées dans les compositions de caoutchouc pour bande de roulement sont généralement des silices de précipitation ou de pyrogénation, silices dites renforçantes. On peut par exemple se référer à la publication de Encyclopedia of Polymer Science and Technology, John Wiley and Sohns, Inc., Vol 11, p. 612 (2004).

L'utilisation de fumée de silice, également désignée sous l'appellation de microsilice, est largement répandue dans l'industrie du béton. Son utilisation dans des compositions de caoutchouc pour pneumatique, l'est beaucoup moins et lorsqu'elle est utilisée dans des compositions de caoutchouc pour pneumatique, elle est utilisée à des taux très inférieurs à ceux de la silice traditionnellement utilisée. Il a été proposé dans la demande de brevet JP2006241297 de remplacer une silice de précipitation par une microsilice dans une composition de caoutchouc diénique renforcée par un noir de carbone pour améliorer sa processabilité. Il a été aussi proposé dans le document EP2072284 d'ajouter une microsilice dans une composition de caoutchouc d'une gomme intérieure d'un pneumatique comprenant un caoutchouc butyl et un noir de carbone à titre de charge renforçante pour améliorer les propriétés d'imperméabilité de la gomme intérieure. Il a été également proposé dans le document EP2336231A1 d'introduire dans une composition de caoutchouc diénique pour une bande de roulement d'un pneumatique comprenant à titre de charge renforçante une silice de précipitation hautement structurée une microsilice à un taux très inférieur au taux de la silice de précipitation pour améliorer la performance de résistance au roulement du pneumatique. Le document JP2008031244A divulgue une composition pour bande de roulement de pneumatique comprenant un élastomère diénique, une silice de précipitation, une microsilice, un agent de couplage silane et un système de réticulation.

La Demanderesse a découvert que l'introduction, dans une composition de caoutchouc diénique comprenant une silice renforçante, d'une microsilice à un taux plus élevé que la silice renforçante permet d'augmenter le potentiel hystérétique de la composition de caoutchouc et ainsi d'améliorer les performances d'adhérence sur sol mouillé d'une bande de roulement d'un pneumatique contenant une telle composition de caoutchouc.

Ainsi un premier objet de l'invention est une composition de caoutchouc qui comprend un élastomère diénique, une première silice qui est une silice de précipitation ou de pyrogénation et qui est de surface spécifique BET supérieure à 100 $m^2/g$ à titre de charge renforçante, une deuxième silice qui est une microsilice de surface spécifique BET inférieure à 50 $m^2/g$, un agent de couplage silane et un système de réticulation,
dans laquelle

> les taux de la première silice et de la deuxième silice étant exprimés en partie en poids pour cent parties d'élastomère, pce, et notés respectivement T1 et T2
> T1 est supérieure à 15 pce et est inférieure à T2
> et la somme de T1 et de T2 est supérieure à 75 pce.

Un autre objet de l'invention est un pneumatique qui comprend une composition de caoutchouc conforme à l'invention, préférentiellement dans sa bande de roulement.

## Description

Tout intervalle de valeurs désigné par l'expression "entre a et b" représente le domaine de valeurs supérieur à "a" et inférieur à "b" (c'est-à-dire bornes "a" et "b" exclues) tandis que tout intervalle de valeurs désigné par l'expression "de a à b" signifie le domaine de valeurs allant de "a" jusqu'à "b" (c'est-à-dire incluant les bornes strictes "a" et "b").

Par l'expression "partie en poids pour cent parties en poids d'élastomère" (ou pce), il faut entendre au sens de la présente invention, la partie, en masse pour cent parties en masse d'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

La microsilice, également dénommée fumée de silice (en anglais « silica fume ») ne doit pas être confondue avec la silice fumée (en anglais « fumed silica »), aussi appelée silice de pyrogénation. Le procédé de production, la morphologie des particules et les domaines d'application de la microsilice sont différents de ceux de la silice fumée. La microsilice est traditionnellement obtenue dans les procédés de fabrication du silicium ou des alliages de ferrosilicium. Au cours d'un procédé électrométallurgique mettant en œuvre la carboréduction du quartz dans la production du silicium et des alliages Fe-Si, il se forme un sous-produit, un gaz de formule SiO qui est valorisé en l'oxydant au contact d'oxygène pour former $SiO_2$ qui se condense en des particules sphériques de fumée de silice. La fumée de silice ou microsilice est une forme amorphe, non cristalline et polymorphe de $SiO_2$. La microsilice est constituée essentiellement de particules sphériques de taille nanométrique. L'application la plus importante de la microsilice est le matériau pouzzolanique pour le béton à haute performance.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

On entend particulièrement par élastomère diénique susceptible d'être utilisé dans les compositions conformes à l'invention :

(a) - tout homopolymère d'un monomère diène, conjugué ou non, ayant de 4 à 24 atomes de carbone ;
(b) - tout copolymère d'un diène, conjugué ou non, ayant de 4 à 24 atomes de carbone et d'au moins un autre monomère.

Par copolymère d'un diène, conjugué ou non, ayant de 4 à 24 atomes de carbone et d'au moins un autre monomère, il faut comprendre un copolymère d'un diène et d'un ou plusieurs autre(s) monomère(s). Comme autre monomère on peut citer l'éthylène, une oléfine et un diène, conjugué ou non, différent du premier diène.

A titre de diènes conjugués conviennent les diènes conjugués ayant de 4 à 24 atomes de carbone, en particulier les 1,3-diènes ayant 4 à 12 atomes de carbone, tels que notamment le 1,3-butadiène et l'isoprène, ou encore un 1,3-diène de formule $CH_2=CR-CH=CH_2$, dans laquelle R représente une chaîne hydrocarbonée ayant 3 à 20 atomes de carbone, tel que par exemple un monoterpène ($C_{10}H_{16}$) linéaire, comme le myrcène, un sesquiterpène ($C_{15}H_{24}$) linéaire, comme le farnésène etc. Tout particulièrement, à titre de diènes conjugués conviennent le 1,3-butadiène, l'isoprène, le myrcène et le farnésène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les $\alpha$-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'$\alpha$-monooléfines aliphatiques conviennent notamment les $\alpha$-monooléfines aliphatiques acycliques ayant de 3 à 18 atomes de carbone.

Plus particulièrement, l'élastomère diénique est :

(a')- tout homopolymère d'un monomère diène conjugué, notamment tout homopolymère obtenu par polymérisation d'un monomère diène conjugué ayant de 4 à 12 atomes de carbone;

(b')- tout copolymère obtenu par copolymérisation d'un ou plusieurs diènes conjugués entre eux ou avec un ou plusieurs composés vinylaromatiques ayant de 8 à 20 atomes de carbone;
(c') - un copolymère d'isobutène et d'isoprène (caoutchouc butyle), ainsi que les versions halogénées, en particulier chlorées ou bromées, de ce type de copolymère ;
(d') - tout copolymère obtenu par copolymérisation d'un ou plusieurs diènes, conjugués ou non, avec l'éthylène, une $\alpha$-monooléfine ou leur mélange comme par exemple les élastomères obtenus à partir d'éthylène, de propylène avec un monomère diène non conjugué du type précité, ou encore les élastomères obtenus à partir d'éthylène et d'un ou de plusieurs 1,3-diènes du type précité.

Lorsque l'élastomère diénique est un copolymère, il est préférentiellement un copolymère statistique.

L'élastomère diénique peut être modifié, par exemple c'est à dire couplé, étoilé ou fonctionnalisé. Parmi les élastomères fonctionnalisés, on peut citer ceux portant un ou plusieurs groupes fonctionnels comprenant un hétéroatome tel que Si, N et O.

L'élastomère diénique utile aux besoins de l'invention est préférentiellement un homopolymère d'un 1,3-diène ou un copolymère d'un 1,3-diène ou leur mélange. Le 1,3-diène est préférentiellement le 1,3-butadiène ou un mélange de 1,3-diènes dont un est le 1,3-butadiène. Lorsque l'élastomère diénique est un copolymère d'un 1,3-diène, il est préférentiellement un copolymère statistique.

Selon une première variante de l'invention, l'élastomère diénique est choisi dans le groupe constitué par les élastomères fortement insaturés, c'est-à-dire les élastomères diéniques qui contiennent au moins 50% en moles d'unités diéniques. De manière connue, on entend par unité diénique une unité résultant de la polymérisation d'un diène et contenant une double liaison carbone-carbone. Comme élastomères diénique fortement insaturés, on peut citer les polybutadiènes (BR), le caoutchouc naturel (NR), les polyisoprènes de synthèse (IR), les copolymères de butadiène, les copolymères d'isoprène, et les mélanges de ces élastomères.

Selon une deuxième variante de l'invention, l'élastomère diénique est un copolymère d'éthylène et d'un 1,3-diène et contient plus de 50% en mole d'unité éthylène. En raison de son taux prépondérant en unité éthylène, il est qualifié d'élastomère fortement saturé. Il est préférentiellement statistique. De manière connue, l'expression « unité éthylène » fait référence au motif $-(CH_2-CH_2)-$ résultant de l'insertion de l'éthylène dans la chaîne élastomère.

Sauf indication contraire, les taux des unités résultant de l'insertion d'un monomère dans un copolymère tel que le copolymère utile à l'invention sont exprimés en pourcentage molaire par rapport à la totalité des unités monomères du copolymère.

De préférence, l'élastomère diénique fortement saturé comprend au moins 55% molaire d'unité éthylène, préférentiellement au moins 60% molaire d'unité éthylène, plus préférentiellement au moins 65% molaire d'unité éthylène. Autrement dit, les unités éthylène dans l'élastomère diénique fortement saturé représentent préférentiellement au moins 55% en mole de l'ensemble des unités monomères de l'élastomère diénique fortement saturé, plus préférentiellement au moins 60% en mole de l'ensemble des unités monomères de l'élastomère diénique fortement saturé. De manière encore plus préférentielle, les unités éthylène représentent au moins 65% en mole de l'ensemble des unités monomères de l'élastomère diénique fortement saturé.

De préférence, les unités éthylène dans l'élastomère diénique fortement saturé représentent au plus 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. De manière encore plus préférentielle, les unités éthylène représentent au plus 80% en mole de l'ensemble des unités monomères de l'élastomère diénique fortement saturé.

Selon un mode de réalisation avantageux, l'élastomère diénique fortement saturé comprend de 55% à 90% molaire d'unité éthylène, particulièrement de 55% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 55% à 80% molaire d'unité éthylène, pourcentage molaire calculé sur la base de l'ensemble des unités monomères de l'élastomère diénique fortement saturé.

Selon un autre mode de réalisation avantageux, l'élastomère diénique fortement saturé comprend de 60% à 90% molaire d'unité éthylène, particulièrement de 60% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 60% à 80% molaire d'unité éthylène, pourcentage molaire calculé sur la base de l'ensemble des unités monomères de l'élastomère diénique fortement saturé.

Selon encore un autre mode de réalisation avantageux, l'élastomère diénique fortement saturé comprend de 65% à 90% molaire d'unité éthylène, particulièrement de 65% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 65% à 80% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des

unités 1,3-diène résultant de la polymérisation d'un 1,3-diène. De manière connue, l'expression « unité 1,3-diène » ou « unité diénique » fait référence aux unités résultant de l'insertion du 1,3-diène par une addition 1,4, une addition 1,2 ou une addition 3,4 dans le cas de l'isoprène par exemple. De préférence, le 1,3-diène est le 1,3-butadiène ou un mélange de 1,3-diènes dont un est le 1,3-butadiène. De manière plus préférentielle, le 1,3-diène est le 1,3-butadiène, auquel cas l'élastomère diénique fortement saturé est un copolymère d'éthylène et de 1,3-butadiène, de préférence statistique.

L'élastomère diénique fortement saturé peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. Avantageusement, l'élastomère diénique fortement saturé est statistique et est préparé préférentiellement selon un procédé semi continu ou continu tel que décrit dans les documents WO 2017103543 A1, WO 201713544 A1, WO 2018193193 et WO 2018193194.

L'élastomère diénique fortement saturé contient de préférence des unités de formule (I) ou des unités de formule (II).

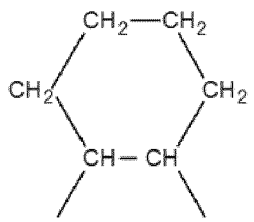

(I)

$-CH_2-CH(CH=CH_2)-$ (II)

La présence de motif cyclique saturé à 6 membres, motif 1,2-cyclohexane, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1) ou à l'équation (eq. 2), o et p étant calculés sur la base de l'ensemble des unités monomères de l'élastomère diénique fortement saturé.

$$0 < o+p \leq 30 \quad \text{(eq. 1)}$$

$$0 < o+p < 25 \quad \text{(eq. 2)}$$

De préférence, l'élastomère diénique fortement saturé comprend des unités de formule (I) selon un taux molaire supérieur à 0% et inférieur à 15%, plus préférentiellement inférieur à 10% molaire, pourcentage molaire calculé sur la base de l'ensemble des unités monomères de l'élastomère diénique fortement saturé.

De préférence, le taux de l'élastomère diénique fortement saturé dans la composition de caoutchouc est d'au moins 50 parties en poids pour cent parties d'élastomère de la composition de caoutchouc (pce). De manière plus préférentielle, le taux de l'élastomère diénique fortement saturé dans la composition de caoutchouc varie dans un domaine allant de 80 à 100 pce. De manière encore plus préférentielle, il varie dans un domaine allant de 90 à 100 pce. Il est avantageusement de 100 pce. L'élastomère diénique fortement saturé peut être un seul élastomère diénique fortement saturé ou bien un mélange de plusieurs élastomères diéniques fortement saturés qui se différencient les uns des autres par leurs microstructures ou par leurs macrostructures. Dans le cas où la composition de caoutchouc contient plusieurs élastomères diéniques fortement saturés qui se différencient les uns des autres par leurs microstructures ou par leurs macrostructures, le taux de l'élastomère diénique fortement saturé dans la composition de caoutchouc se rapporte au mélange d'élastomères diéniques fortement saturés.

Les modes de réalisation de l'invention selon lesquels la composition de caoutchouc comprend au moins 50 pce d'un élastomère diénique fortement saturé sont particulièrement avantageux pour l'utilisation de la composition de caoutchouc dans une bande de roulement d'un pneumatique, puisque la bande de roulement allie à la fois de bonne

performance d'adhérence sur sol mouillé et de bonne performance de résistance à l'usure.

La composition de caoutchouc de l'invention peut contenir un seul élastomère diénique ou un mélange de plusieurs élastomères diéniques, qu'ils soient fortement saturés ou non. Selon l'un quelconque des modes de réalisation de l'invention, les élastomères qui entrent dans la composition de caoutchouc diénique conforme à l'invention sont préférentiellement tous des élastomères diéniques.

La composition de caoutchouc conforme à l'invention a pour autre caractéristique essentielle de comprendre à titre de charge renforçante une silice ayant une surface spécifique supérieure à 100 $m^2/g$, dite première silice. La première silice utilisée à titre de charge renforçante est une silice de précipitation ou une silice de pyrogénation, de préférence une silice de précipitation, également connue sous le nom de silice précipitée.

On peut utiliser tout type de silice précipitée, notamment des silices précipitées hautement dispersibles (dites « HDS » pour « highly dispersible » ou « highly dispersible silica ») dès lors qu'elles présentent une surface spécifique BET supérieure à 100 $m^2/g$. Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Bien entendu, la première silice peut être un mélange de silices, en particulier de silices précipitées telles que décrites ci-dessus.

L'état physique sous lequel se présente la première silice est indifférent, que ce soit sous forme de poudre, de microperles, de granulés, ou encore de billes ou toute autre forme densifiée appropriée.

La première silice présente une surface spécifique BET préférentiellement inférieure à 200 $m^2/g$, plus préférentiellement inférieure à 180 $m^2/g$.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

La composition de caoutchouc peut comprendre en outre un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Lorsque le noir de carbone est utilisé dans la composition de caoutchouc, il l'est de préférence à un taux inférieur ou égal à 10 pce (par exemple le taux de noir de carbone peut être compris dans un domaine allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

La composition de caoutchouc a aussi pour autre caractéristique essentielle de comprendre une microsilice de surface spécifique BET inférieure à 50 $m^2/g$, préférentiellement supérieure à 10 $m^2/g$ et inférieure à 40 $m^2/g$, encore plus préférentiellement supérieure ou égale à 15 $m^2/g$ et inférieure ou égale à 30 $m^2/g$. Les microsilices sont des produits disponibles commercialement, par exemple sous l'appellation commerciale « Sidistar » et « Microfume » des sociétés respectives Elkem et Ferropem.

Le taux de la première silice et le taux de la deuxième silice dans la composition de caoutchouc, notés respectivement T1 et T2 et exprimés en pce sont tels que T1 est supérieur à 15 pce et est inférieur à T2 et que la somme de T1 et de T2, c'est-à-dire T1 + T2, est supérieure à 75 pce. Typiquement, la somme de T1 et de T2 est comprise entre 75 pce et 180 pce.

De préférence, la somme de T1 et de T2 est inférieure à 140 pce. La somme de T1 et de T2 est avantageusement supérieure à 90 pce et inférieure à 140 pce.

Selon un mode de réalisation particulièrement préférentiel de l'invention, les taux T1 et T2 sont reliés par la relation (1) suivante. Ce mode de réalisation particulièrement préférentiel est avantageux pour une application de la composition de caoutchouc dans une bande de roulement d'un pneumatique, car la composition de caoutchouc a une contribution vis-à-vis de l'hystérèse dans la zone de la résistance au roulement qui est réduite tout en ayant un potentiel hystérétique élevé dans la zone de la performance d'adhérence sur sol mouillé.

$$T2 \geq 1.73 \times (T1 + T2) - 125 \qquad (1)$$

Lorsque ce mode de réalisation particulièrement préférentiel est combiné au mode de réalisation selon lequel la composition de caoutchouc contient plus de 50 pce d'un élastomère diénique fortement saturé tel que défini précédemment, la composition de caoutchouc a la propriété de conférer à une bande de roulement d'un pneumatique à la fois de bonne performance d'adhérence, de résistance au roulement et de résistance à l'usure.

On utilise de manière bien connue un agent de couplage (ou agent de liaison), un silane, destiné à assurer une connexion suffisante, de nature chimique et/ou physique, entre les silices de la composition de caoutchouc (surface de leurs particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec les silices et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une silice, par exemple de la première silice, et un second groupe fonctionnel comprenant un atome de soufre, le dit second groupe fonctionnel étant apte à interagir avec l'élastomère diénique.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) $Z\text{-}A\text{-}S_x\text{-}A\text{-}Z$ ,

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

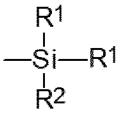 ; 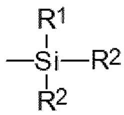 ; 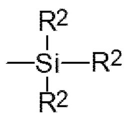 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemples d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans la composition de caoutchouc conforme à l'invention, le taux de l'agent de couplage silane est ajusté par l'homme du métier selon la structure chimique de l'agent de couplage, selon la surface spécifique totale développée par la première silice et la deuxième silice de la composition de caoutchouc. Il est préférentiellement compris dans un domaine allant de 1 à 15 pce, préférentiellement de 1.5 à 10 pce, encore plus préférentiellement de 2 à 5 pce.

La composition de caoutchouc conforme à l'invention a pour autre caractéristique essentielle de contenir un système de réticulation, préférentiellement un système de vulcanisation, c'est-à-dire un système de réticulation à base de soufre. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 4 pce, celui de l'accélérateur primaire est de préférence compris entre 0,5 et 5 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La vulcanisation est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, des plastifiants tels que des huiles ou des résines plastifiantes.

La composition de caoutchouc, avant vulcanisation, peut être fabriquée dans des mélangeurs appropriés, en utilisant deux phases de préparation successives selon une procédure bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à

cylindres, le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (après vulcanisation). Elle peut constituer tout ou partie d'un article semi-fini, en particulier destiné à être utilisé dans un bandage pneumatique ou non pneumatique qui comporte une bande de roulement, notamment dans la bande de roulement du bandage.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

Microstructure des élastomères par analyse de résonance magnétique

nucléaire (RMN) :

La microstructure des élastomères est déterminée par analyse RMN $^{1}H$, suppléée par l'analyse RMN $^{13}C$ lorsque la résolution des spectres RMN du $^{1}H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé) :

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Température de transition vitreuse des polymères :

La température de transition vitreuse (Tg) est mesurée au moyen d'un calorimètre différentiel ("Differential Scanning Calorimeter") selon la norme ASTM D3418 (1999).

Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0,83 Newton.mètre).

Propriétés dynamiques :

Les propriétés dynamiques sont mesurées sur un viscoanalyseur (Metravib VA4000), selon la norme ASTM D 5992-96.

On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, lors d'un balayage en température, sous une contrainte fixe de 0,7 MPa, on enregistre la valeur de tanδ observée à 0°C (tanδ à 0°C).

Pour la mesure de tan delta max à 23°C, on effectue à 23°C un balayage en amplitude de déformation de 0 à 50% (cycle aller), puis de 50% à 0% (cycle retour). Pour le cycle retour, on mesure la valeur maximale de tanδ observée, tanδ (max).

Les résultats sont exprimés en base 100 par rapport à un témoin. Une valeur supérieure à celle du témoin, arbitrairement fixée à 100, indique une grandeur mesurée supérieure à celle du témoin.

Pour tanδ à 0°C, une valeur supérieure à 100 indique un potentiel hystérétique supérieur à celui du témoin dans la zone de la performance de l'adhérence sur sol mouillé, soit une performance améliorée de l'adhérence sur sol mouillé.

Pour tanδ(max) à 23°C, une valeur inférieure à 100 indique des propriétés d'hystérèse plus faibles que celles du témoin dans la zone de la performance de la résistance au roulement, soit une performance améliorée de la résistance au roulement.

Préparation des compositions de caoutchouc :

Quatre compositions de caoutchouc C1 à C4 sont préparées. On procède pour la fabrication de ces compositions de la manière suivante :
On introduit dans un mélangeur interne (taux de remplissage final : environ 70% en volume), dont la température initiale de cuve est d'environ 80°C, l'élastomère, puis la silice de précipitation, le cas échéant la microsilice, l'agent de couplage silane, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C.

On récupère le mélange ainsi obtenu, on le refroidit puis on incorpore du soufre et un accélérateur type sulfénamide sur un mélangeur (homo-finisseur) à environ 60°C, en mélangeant le tout (phase productive) pendant un temps approprié (par exemple entre 5 et 12 min).

Le détail des formulations des compositions figure dans le tableau 1. Le taux de silane et le taux de DPG sont indexés sur la surface totale développée par les silices. Le taux total de soufre qui provient du soufre moléculaire ($S_8$) et du silane polysulfure est identique dans toutes les compositions.
Les compositions C2, C3 et C4 sont des compositions conformes à l'invention. Elles se distinguent de la composition C1 par la présence d'une microsilice. Dans les compositions selon l'invention, la microsilice est utilisée à un taux plus élevé que la silice de précipitation pour la remplacer partiellement comparativement à la composition C1. Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques après vulcanisation à 150°C (état cuit), soit sous la forme de profilés directement utilisables, après découpage et/ou assemblage aux dimensions souhaitées, par exemple comme produits semi-finis pour pneumatiques.

Le copolymère d'éthylène et de 1,3-butadiène, élastomère E1, est synthétisé selon le mode opératoire décrit ci-après.
Tous les réactifs sont obtenus commercialement excepté le métallocène qui peut être préparé selon le mode opératoire décrit dans le document WO 2007054224. Le butyloctylmagnésium BOMAG (20% dans l'heptane, C = 0,88 $mol.L^{-1}$) provient de Chemtura et est transféré puis stocké dans un tube de Schlenk sous atmosphère inerte. L'éthylène, de qualité N35, provient de la société Air Liquide et est utilisé sans purification préalable.

Dans un réacteur de 90 L contenant, à 80°C, 64 L de méthylcyclohexane, ainsi que de l'éthylène (Et) et du butadiène (Bd) à un ratio molaire de 80% d'éthylène et de 20% de butadiène, on ajoute 13.6 mmol d'une solution de butyloctylmagnésium (BOMAG) dans le méthylcyclohexane à 0.01 mol/L dont une partie est utilisée pour neutraliser les impuretés dans le réacteur, puis 745 mL d'une solution d'un système catalytique (voir tableau 2), le ratio [Mg actif]/[Nd] est de 4.8 . A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène (Bd)à un ratio molaire de 80% d'éthylène et de 20% de butadiène. Après formation de 6500 g de polymère, la réaction de polymérisation est stoppée par refroidissement, dégazage du réacteur et ajout d'éthanol. Un anti-oxydant est ajouté à la solution de polymère. Le copolymère est récupéré par un procédé d'entraînement à la vapeur appelé « stripping » bien connu de l'homme du métier, puis séché jusqu'à l'obtention d'un taux de matière volatile inférieur à 0.8% en masse. Le système catalytique est un système catalytique préformé. Il est préparé dans le méthylcyclohexane à

partir d'un métallocène, le [$Me_2SiFlu_2Nd(\mu\text{-}BH_4)_2Li(THF)$], d'un co-catalyseur, le butyloctylmagnésium (BOMAG), et d'un monomère de préformation, le 1,3-butadiène, dans les teneurs indiquées dans le Tableau 2. Il est préparé selon une méthode de préparation conforme au paragraphe II.1 de la demande de brevet WO 2017/093654 A1.

La microstructure du copolymère E1 et ses propriétés figurent dans les tableaux 3 et 4. Pour la microstructure, le Tableau 3 indique les taux molaires des unités éthylène (Et), des unités du 1,3-butadiène, des motifs 1,2-cyclohexanediyle (cycle).

Comme la valeur de tanδ à 0°C des compositions C2, C3 et C4 est plus élevée que celle de la composition C1, les compositions de caoutchoucs C2 à C4 possèdent un potentiel hystérétique dans la zone de la performance d'adhérence sur sol mouillé qui est plus important que celui de la composition C1. Ce résultat est obtenu alors même que le taux de la silice de précipitation traditionnellement utilisée dans les compositions de caoutchouc pour pneumatique est très inférieur au taux de la silice de précipitation de la composition C1 représentative des compositions de caoutchouc conventionnelles des bandes de roulement pour pneumatique.

A partir de la comparaison des compositions C2 à C4 avec la composition C1, il est observé de façon surprenante que l'ajout dans une composition de caoutchouc comprenant une silice de précipitation d'une microsilice à un taux plus élevé que la silice de précipitation pour la remplacer partiellement permet d'augmenter le potentiel hystérétique de la composition de caoutchouc dans la zone de performance de l'adhérence sur mouillé.

Les compositions C2 et C4 dans lesquelles les taux de silice satisfont à la relation (1) sont les compositions qui présentent aussi le meilleur compromis de performance entre l'adhérence sur sol mouillé et la résistance au roulement, puisqu'elles présentent aussi chacune une valeur de tandelta max à 23°C qui s'avère parmi les plus faibles.

Tableau 1

| Composition | C1 | C2 | C3 | C4 |
|---|---|---|---|---|
| Elastomère E1 | 100 | 100 | 100 | 100 |
| Noir de carbone (1) | 3 | 3 | 3 | 3 |
| Silice de precipitation (2) | 76 | 37.5 | 37.5 | 19 |
| Microsilice (3) | 0 | 76 | 123 | 114 |
| Agent de couplage silane (4) | 6.1 | 3.9 | 4.5 | 2.9 |
| DPG (5) | 1.5 | 1.0 | 1.1 | 0.7 |
| Agent plastifiant liquide (6) | 22 | 22 | 22 | 22 |
| Résine plastifiante (7) | 50 | 50 | 50 | 50 |
| Cire antiozonante (8) | 1.6 | 1.6 | 1.6 | 1.6 |
| Antioxydant (9) | 2 | 2 | 2 | 2 |
| ZnO (10) | 0.9 | 0.9 | 0.9 | 0.9 |
| Acide stéarique (11) | 2 | 2 | 2 | 2 |
| Soufre | 1.0 | 1.2 | 1.2 | 1.3 |
| CBS (12) | 2 | 2 | 2 | |
| Tanδ 0°C | 100 | 106 | 112 | 110 |
| Tanδ max 23°C | 100 | 100 | 117 | 88 |

(1) N234
(2) "Zeosil 1165 MP" de Solvay-Rhodia sous forme de microperles, BET de 160 m2/g
(3) « Microfume Concrete Premium » (92 à 96% de $SiO_2$) de Ferropem-Montricher, BET de 24 m2/g
(4) TESPT ("Si69" de Evonik)
(5) Diphénylguanidine
(6) MES/HPD (Catenex SNR de Shell)
(7) Résine hydrocarbonée C9/Dicyclopentadiène «Escorez 5600» de la société EXXON (Tg = 55°C)
(8) Cire anti-ozone « Redezon 500 » de la société Repsol
(9) N-1,3-diméthylbutyl-N-phényl-para-phenyldiamine (« Santoflex 6-PPD » de Flexsys)
(10) Oxyde de Zinc de grade industriel de Umicore
(11) Stéarine « Pristerene 4931 » de Uniquema
(12) N-cyclohexyl-2-benzothiazol-sulfénamide (« Santocure CBS » de Flexsys)

Tableau 2

| | |
|---|---|
| Synthèse du système catalytique | |
| Concentration métallocène (mmol/L) | 6.5 |
| Concentration agent alkylant (mmol/L) | 14 |
| Ratio molaire butadiène/ métal Nd | 90 |

Tableau 3

| | |
|---|---|
| Elastomère | E1 |
| Ethylène (%mol) | 77 |
| Butadiène 1,3 (%mol) | 15 |
| 1,2-cyclohexanediyle (%mol) | 8 |

Tableau 4

| | |
|---|---|
| Elastomère | E1 |
| Tg (°C) | -40°C |
| Mn (g/mol) | 142000 |
| Mooney (ML (1+4)) à 100°C | 85 ± 8 |

**Revendications**

1. Composition de caoutchouc qui comprend un élastomère diénique, une première silice qui est une silice de précipitation ou de pyrogénation et qui est de surface spécifique BET supérieure à 100 $m^2/g$ à titre de charge renforçante, une deuxième silice qui est une microsilice de surface spécifique BET inférieure à 50 $m^2/g$, la surface spécifique BET étant déterminée selon la méthode décrite dans la description,

   un agent de couplage silane et
   un système de réticulation,
   dans laquelle
   les taux de la première silice et de la deuxième silice étant exprimés en partie en poids pour cent parties d'élastomère, pce, et notés respectivement T1 et T2 T1 est supérieur à 15 pce et est inférieur à T2
   et la somme de T1 et de T2 est supérieure à 75 pce.

2. Composition de caoutchouc selon la revendication 1 dans laquelle la deuxième silice a une surface spécifique BET supérieure à 10 $m^2/g$ et inférieure à 40 $m^2/g$.

3. Composition de caoutchouc selon la revendication 1 ou 2 dans laquelle la première silice a une surface spécifique BET inférieure à 200 $m^2/g$, préférentiellement inférieure à 180 $m^2/g$.

4. Composition de caoutchouc selon l'une quelconque des revendications 1 à 3 dans laquelle l'élastomère diénique est un homopolymère d'un 1,3-diène ou un copolymère d'un 1,3-diène ou leur mélange.

5. Composition de caoutchouc selon l'une quelconque des revendications 1 à 4 dans laquelle l'élastomère diénique est un copolymère d'éthylène et d'un 1,3-diène et contient plus de 50% en mole d'unité éthylène.

6. Composition de caoutchouc selon la revendication 4 ou 5 dans laquelle le 1,3-diène est le 1,3-butadiène ou un mélange de 1,3-diènes dont un est le 1,3-butadiène.

7. Composition de caoutchouc selon l'une quelconque des revendications 1 à 6 dans laquelle la somme de T1 et de T2 est inférieure à 140 pce.

8. Composition de caoutchouc selon l'une quelconque des revendications 1 à 7 dans laquelle la somme de T1 et de T2 est supérieure à 90 pce et inférieure à 140 pce.

9. Composition de caoutchouc selon l'une quelconque des revendications 1 à 8 dans laquelle T1 et T2 satisfont à la relation (1) suivante

$$T2 \geq 1.73 \times (T1 + T2) - 125 \qquad (1)$$

10. Composition de caoutchouc selon l'une quelconque des revendications 1 à 9 dans laquelle le système de réticulation est un système de vulcanisation.

11. Pneumatique qui comprend une composition de caoutchouc selon l'une quelconque des revendications 1 à 10.

12. Pneumatique qui comporte une bande de roulement comprenant une composition de caoutchouc selon l'une quelconque des revendications 1 à 10.

## Patentansprüche

1. Kautschukzusammensetzung, die ein Dienelastomer, eine erste Kieselsäure, bei der es sich um eine Fällungskieselsäure oder pyrogene Kieselsäure handelt und die eine spezifische BET-Oberfläche von mehr als 100 $m^2/g$ aufweist, als verstärkenden Füllstoff, eine zweite Kieselsäure, bei der es sich um eine Mikrokieselsäure mit einer spezifischen BET-Oberfläche von weniger als 50 $m^2/g$ handelt, wobei die spezifische BET-Oberfläche gemäß der in der Beschreibung beschriebenen Methode bestimmt wird, ein Silan-Kupplungsmittel und ein Vernetzungssystem umfasst; in der:
wobei die Gehalte der ersten Kieselsäure und der zweiten Kieselsäure als Gewichtsteile pro hundert Teile Elastomer, phe, ausgedrückt und als T1 bzw. T2 bezeichnet werden:

   T1 größer als 15 phe und kleiner als T2 ist
   und die Summe von T1 und T2 größer als 75 phe ist.

2. Kautschukzusammensetzung nach Anspruch 1, wobei die zweite Kieselsäure eine spezifische BET-Oberfläche von mehr als 10 $m^2/g$ und weniger als 40 $m^2/g$ aufweist.

3. Kautschukzusammensetzung nach Anspruch 1 oder 2, wobei die erste Kieselsäure eine spezifische BET-Oberfläche von weniger als 200 $m^2/g$, vorzugsweise weniger als 180 $m^2/g$, aufweist.

4. Kautschukzusammensetzung nach einem der Ansprüche 1 bis 3, wobei es sich bei dem Dienelastomer um ein Homopolymer eines 1,3-Diens oder ein Copolymer eines 1,3-Diens oder eine Mischung davon handelt.

5. Kautschukzusammensetzung nach einem der Ansprüche 1 bis 4, wobei das Dienelastomer ein Copolymer von Ethylen und einem 1,3-Dien ist und mehr als 50 Mol-% Ethyleneinheiten enthält.

6. Kautschukzusammensetzung nach Anspruch 4 oder 5, wobei es sich bei dem 1,3-Dien um 1,3-Butadien oder eine Mischung von 1,3-Dienen, von denen eines 1,3-Butadien ist, handelt.

7. Kautschukzusammensetzung nach einem der Ansprüche 1 bis 6, wobei die Summe von T1 und T2 weniger als 140 phe beträgt.

8. Kautschukzusammensetzung nach einem der Ansprüche 1 bis 7, wobei die Summe von T1 und T2 mehr als 90 phe und weniger als 140 phe beträgt.

9. Kautschukzusammensetzung nach einem der Ansprüche 1 bis 8, wobei T1 und T2 die folgende Beziehung (1) erfüllen:

$$T2 \geq 1,73 \times (T1 + T2) - 125 \quad (1)$$

**10.** Kautschukzusammensetzung nach einem der Ansprüche 1 bis 9, wobei es sich bei dem Vernetzungssystem um ein Vulkanisationssystem handelt.

**11.** Reifen, der eine Kautschukzusammensetzung nach einem der Ansprüche 1 bis 10 umfasst.

**12.** Reifen, der eine Lauffläche umfasst, die eine Kautschukzusammensetzung nach einem der Ansprüche 1 bis 10 umfasst.

## Claims

**1.** Rubber composition which comprises a diene elastomer, a first silica which is a precipitated or pyrogenic silica and which has a BET specific surface of greater than 100 $m^2/g$ as reinforcing filler, a second silica which is a microsilica with a BET specific surface of less than 50 $m^2/g$, the BET specific surface being determined according to the method described in the specification, a silane coupling agent and a crosslinking system,
in which:
the contents of the first silica and of the second silica being expressed as part by weight per hundred parts of elastomer, phr, and respectively denoted T1 and T2:

T1 is greater than 15 phr and is less than T2,
and the sum of T1 and of T2 is greater than 75 phr.

**2.** Rubber composition according to Claim 1, in which the second silica has a BET specific surface of greater than 10 $m^2/g$ and of less than 40 $m^2/g$.

**3.** Rubber composition according to Claim 1 or 2, in which the first silica has a BET specific surface of less than 200 $m^2/g$, preferentially of less than 180 $m^2/g$.

**4.** Rubber composition according to any one of Claims 1 to 3, in which the diene elastomer is a homopolymer of a 1,3-diene or a copolymer of a 1,3-diene or their mixture.

**5.** Rubber composition according to any one of Claims 1 to 4, in which the diene elastomer is a copolymer of ethylene and of a 1,3-diene and contains more than 50 mol% of ethylene units.

**6.** Rubber composition according to Claim 4 or 5, in which the 1,3-diene is 1,3-butadiene or a mixture of 1,3-dienes, one of which is 1,3-butadiene.

**7.** Rubber composition according to any one of Claims 1 to 6, in which the sum of T1 and of T2 is less than 140 phr.

**8.** Rubber composition according to any one of Claims 1 to 7, in which the sum of T1 and of T2 is greater than 90 phr and less than 140 phr.

**9.** Rubber composition according to any one of Claims 1 to 8, in which T1 and T2 satisfy the following relationship (1):

$$T2 \geq 1.73 \times (T1 + T2) - 125 \qquad (1)$$

**10.** Rubber composition according to any one of Claims 1 to 9, in which the crosslinking system is a vulcanization system.

**11.** Tyre which comprises a rubber composition according to any one of Claims 1 to 10.

**12.** Tyre which comprises a tread comprising a rubber composition according to any one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2006241297 B
- EP 2072284 A
- EP 2336231 A1
- JP 2008031244 A
- WO 03018332 A
- FR 2898077
- EP 1092731 A
- WO 2004035639 A
- WO 2007054223 A
- WO 2007054224 A
- WO 2017093654 A1
- WO 2018020122 A1
- WO 2018020123 A1
- WO 2017103543 A1
- WO 201713544 A1
- WO 2018193193 A
- WO 2018193194 A
- WO 03016215 A1
- WO 03016387 A1
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A


### Littérature non-brevet citée dans la description


- Encyclopedia of Polymer Science and Technology. John Wiley and Sohns, Inc., 2004, vol. 11, 612
- *The Journal of the American Chemical Society*, February 1938, vol. 60, 309